# EUROPEAN PATENT SPECIFICATION

(11) **EP 4 027 795 B1**
(45) Date of publication and mention of the grant of the patent: **04.06.2025**
(21) Application number: 20864149.8
(22) Date of filing: 11.09.2020
(51) Int. Cl.: F24C 15/00, A21B 3/04

(54) **AN OVEN**
OFEN
FOUR

(30) Priority: 12.09.2019 AU 2019903396
(43) Date of publication of application: 20.07.2022
(73) Proprietor: Breville Pty Limited, Alexandria, New South Wales 2015 (AU)
(72) Inventor: MARSH-CROFT, Byron Ashley, Alexandria, New South Wales 2015 (AU); ROCCA, Damian Philip, Alexandria, New South Wales 2015 (AU); DASEY, Dylan Stuart, Alexandria, New South Wales 2015 (AU); HEGEDIS, Tibor, Alexandria, New South Wales 2015 (AU); CHING, Alfred Gar-Wo, Alexandria, New South Wales 2015 (AU); LEE, John Chul-Won, Alexandria, New South Wales 2015 (AU)
(74) Representative: Zimmermann, Tankred Klaus
(86) International application number: PCT/AU2020/050971
(87) International publication number: WO 2021/046613

(56) References cited:
- EP-A1- 1 741 986
- EP-A1- 1 898 156
- EP-A1- 1 995 525
- US-A1- 2007 272 676
- US-A1- 2014 060 339

## Description

### FIELD

The present invention relates to ovens, and more particularly, but not exclusively to, ovens having a humidity system.

### BACKGROUND

Heat and humidity are the two critical factors that determine how a food item is cooked in an oven. Humidity governs the temperature at which the food item actually cooks.

Dry air heats food more slowly than moist air, and moist air also smooths out temperature swings and minimises hot and cold zones within the oven.

In moist air, if the temperature of the food item is below the dew point of the air, droplets of water will form on the food item, which then releases a high amount of heat energy. This phase change causes the temperature of the food item to be raised up to the dew point.

Conversely, in dry air, evaporating water absorbs a great deal of heat energy and hence cools the food item through evaporative cooling. The heating of the food item is offset by the cooling effect of evaporation.

A known humidity system in an oven may include the use of a water bath, using a Dutch oven, spraying the oven cavity with water, adding ice cubes, or wrapping the food item in foil. A disadvantage of such known humidity systems is that they are not automated or built in as a feature of the oven, not accurately controllable, and therefore the humidity level in the oven is also difficult to control.

Document EP 1898156 A1 discloses a steam oven that includes an accommodating chamber installed with a driving motor for driving a fan to rotate. An electric heater is positioned around the fan, and a holding tray having a water tank received therein is disposed at the bottom of the oven. An electric heating tray is fixed in the accommodating chamber, and a duct is connected with the water tank and with a water-feeding pipe above the electric heating tray. The housing of the oven has its inner wall provided with a position structure for positioning the plate door of the oven. The driving motor is started to drive the fan to rotate and send hot air out to cooperate with the steam heated in the accommodating chamber for steaming food, keeping moisture of the steamed food. The plate door can be closed by an expansion spring and an elastic engage member, preventing hot air from leaking.
Document EP 1995525 A1 discloses a baking oven that comprises a baking cavity accessible by the user and suitable to receive the foods to be cooked; heating means in thermal contact with the cavity; a reservoir for containing water which identifies a first portion of the cavity and comprises an opening at least partially oriented upwards which serves as interface with a remaining second portion of the cavity external to the reservoir, the water contained in the reservoir evaporating under the action of the heating means; said opening constituting both an inlet for the water to flow into the reservoir and an outlet for the steam from the reservoir; a tubular conduit for the outflow of the water connectable fluid-dynamically to means for supplying the water and having an outlet section internal to the cavity, the water flowing out of the tubular conduit subsequently flowing into the reservoir. To facilitate cleaning operations on the reservoir performed manually by an operator, the outlet section of the tubular conduit is external to the volume generated by a translation of the opening along the physical vertical, said opening remaining parallel to itself during said translation.

### SUMMARY

It is an object of the present invention to substantially overcome, or at least ameliorate, one or more of the disadvantages of existing arrangements, or at least provide a useful alternative to existing arrangements. The invention is defined by the independent claim. Further embodiments are defined by the dependent claims.

There is disclosed herein an oven having a body that includes a base, a ceiling, and a wall extending between the base and the ceiling, the wall at least partly surrounding a cooking cavity;
the base including a base cavity and an opening that extends between the base cavity and the cooking cavity;
the oven further including a removable container having a floor and sidewalls that define a chamber to hold fluids therein, the base cavity adapted to receive the removable container,
the removable container being movable relative to the base cavity between a storage position in which the removable container is retained in the base cavity, and an open position in which the removable container is at least partially exposed relative to the base cavity;
the oven further including an interface assembly providing a connection between a fluid outlet of the removable container and the cooking cavity, the interface assembly including:
   a receptacle mounted above the base and having an open top that is exposed to the cooking cavity, the receptacle being located underneath the cooking cavity, the receptacle further including a fluid inlet;
   a plumbing assembly connecting the fluid outlet of the removable container and the fluid inlet of the open receptacle, the plumbing assembly including a fluid pump operable to direct a flow of fluid from the fluid outlet of the removable container into fluid inlet of the receptacle; and
   a heating assembly mounted to an underside of the receptacle, the heating assembly being adapted to heat fluids in the receptacle for evaporation of said fluids into the cooking cavity.

Preferably, the heating assembly includes a heating element mounted to a substrate, with the substrate being mounted to the underside of the receptacle.

Preferably, the heating element is brazed to the substrate, and the substrate is brazed to the underside of the receptacle.

Preferably, the heating assembly is located above the base of the oven and below the cooking cavity.

Preferably, the plumbing assembly is located adjacent the base of the oven and outside of the cooking cavity.

Preferably, the heating assembly further includes a temperature sensor adapted to detect a temperature of the receptacle.

Preferably, the interface assembly further includes a switch to detect the absence or presence of the removable container in the base cavity.

Preferably, the switch is located towards a rear portion of the removable container.

Preferably, the interface assembly further includes a sensor to detect a fluid level in the chamber of the removable container.

Preferably, the oven further includes a heat shield located between the heating assembly and the plumbing assembly.

Preferably, the heat shield is integrally formed with the base.

Preferably, the oven further includes an inner oven assembly and a base assembly, with the base assembly providing the base of the oven, and the inner oven assembly including a cavity part that has a base and sidewall portions that are integrally formed.

Preferably, the inner oven assembly further includes a tray adapted to be mounted on the base portion of the cavity part, the tray including mounting features that cooperate with corresponding mounting features located on the base portion of the cavity part, and wherein the tray is in the form of a crumb tray.

Preferably, the fluid pump is controllable to create an optimum ratio of flow rate of fluids being introduced into the receptacle to power density so as to cause a desired amount of steam to be directed into the cooking cavity.

### BRIEF DESCRIPTION OF THE DRAWINGS

Preferred forms of the present invention will now be described, by way of example only, with reference to the accompanying drawings, in which:
Figure 1 is a schematic side view of an oven;
Figure 2 is a schematic front view of the oven of Figure 1;
Figure 3 is a schematic isometric exploded parts view of a removable container of the oven of Figure 1;
Figure 4 is a schematic isometric view of the removable container of Figure 3 in an open configuration;
Figure 5 is a schematic isometric view of the removable container of Figure 3 in a closed configuration;
Figure 6 is a schematic isometric view of an interface assembly and a removable container of the oven of Figure 1;
Figure 7 is a further schematic isometric view of the interface assembly and removable container of Figure 6;
Figure 8 is a schematic isometric exploded parts view of the removable container of Figure 1 and a portion of the base of the oven of Figure 1;
Figure 9 is a schematic isometric view of the removable container and base shown in Figure 8;
Figure 10 is a top view of the the removable container and base shown in Figure 8;
Figure 11 is a top view of the removable container and base shown in Figure 9;
Figures 12 to 14 are schematic side views showing the insertion of the removable container into the base as shown in Figure 8;
Figure 15 is a further schematic side view of the oven of Figure 1;
Figure 16 is an enlarged sectioned side view of a heating assembly of the oven of Figure 7;
Figure 17 is a schematic front view of the heating assembly of Figure 8;
Figure 18 is an enlarged side view of a fluid outlet of the removable container of Figure 3 and a valve in an open configuration;
Figure 19 is an enlarged side view of the fluid outlet of Figure 18 with the valve in a closed configuration;
Figure 20 is a schematic isometric view of an inner oven assembly and a base assembly of the oven of Figure 1;
Figure 21 is a schematic isometric view of the base assembly of Figure 11;
Figure 22 is a further schematic isometric view of the base assembly of Figure 11 with the removable container; and
Figure 23 is a schematic view of an operation logic of the oven of Figure 1.

### DETAILED DESCRIPTION OF EMBODIMENTS

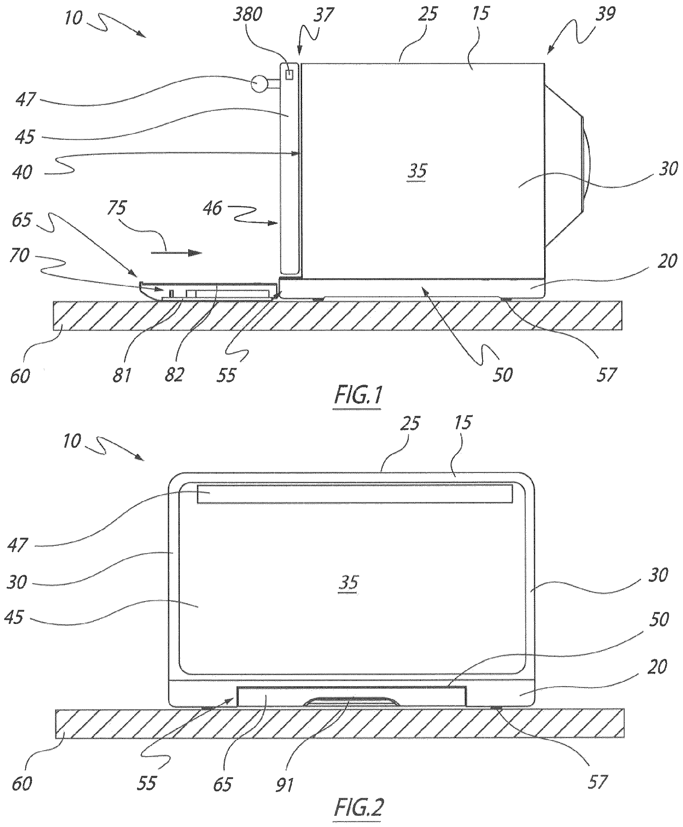

In Figures 1 and 2 of the accompanying drawings, there is schematically depicted an oven 10 for cooking one or more food items (not shown). The oven 10 includes a body 15 having a base 20, a ceiling 25, and a wall 30 extending between the base 20 and the ceiling 25. The wall 30 at least partially surrounds a cooking cavity 35. The oven 10 has a front portion 37 and a rear portion 39. At the front portion 37, the oven 10 also includes an opening 40 providing a passage through which the food item to be cooked is to be moved in and out of the cooking cavity 35. The oven 10 further includes a door 45 enclosing the opening 40. The door 45 is hingedly connected to a lower portion 46 of the door 45 such that the door 45 is moveable between a closed position in which the opening 40 is enclosed (e.g. as shown in Figure 1), and an open position in which the opening 40 is at least partially exposed. The door 45 includes a handle 47 grippable by a user to move the door 45 between the closed and open positions.

The base 20 includes a base cavity 50 and an opening 55 providing access into the base cavity 50. The opening 55 is preferably located centrally and adjacent the front portion 37 of the oven 10, generally below the area that the door 45 is located. The base 20 also includes foot portions 57 for supporting the oven 10 on a surface 60 (such as a surface of a kitchen benchtop).

The oven 10 further includes a removable container 65, and the base cavity 50 is adapted to receive the removable container 65 therein. The removable container 65 is movable relative to the base 20 in a direction 75 between an open position in which the removable container 65 is at least partially exposed relative to the base cavity 50, and a closed position in which the removable container 65 is retained in the base cavity 50. In a preferred form, the removable container 65 is slidable with respect to the base 20 in the direction 75, which is generally parallel to the surface 60. The floor of the removable container 65 is preferably slidable on the surface 60 along the direction 75.

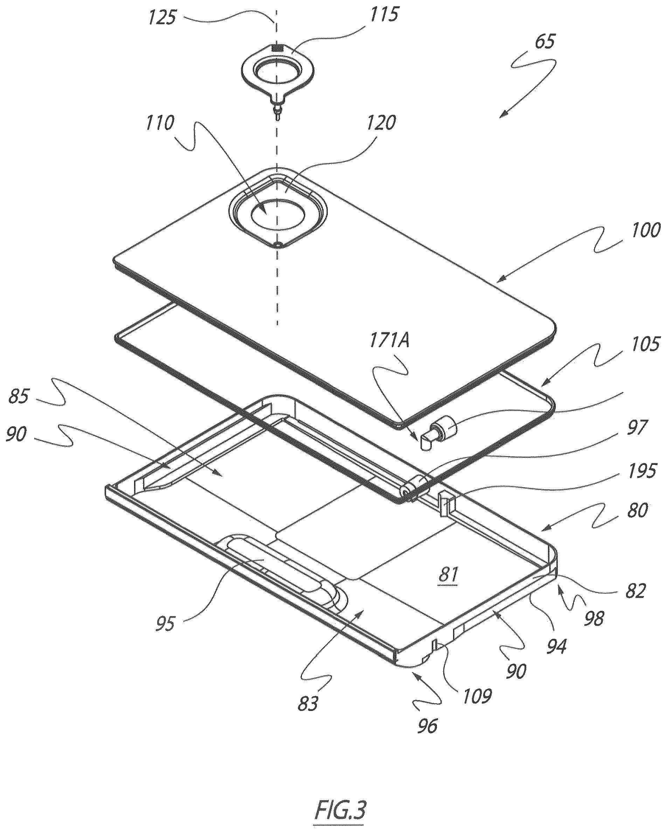

Figure 3 of the accompanying drawings schematically depicts an exploded parts view of the removable container 65. The removable container 65 includes a container body 80 having a floor 81 and sidewalls 82 that define a chamber 85 to hold fluids therein. The container body 80 also has an open top 83 to provide access into the chamber 85.

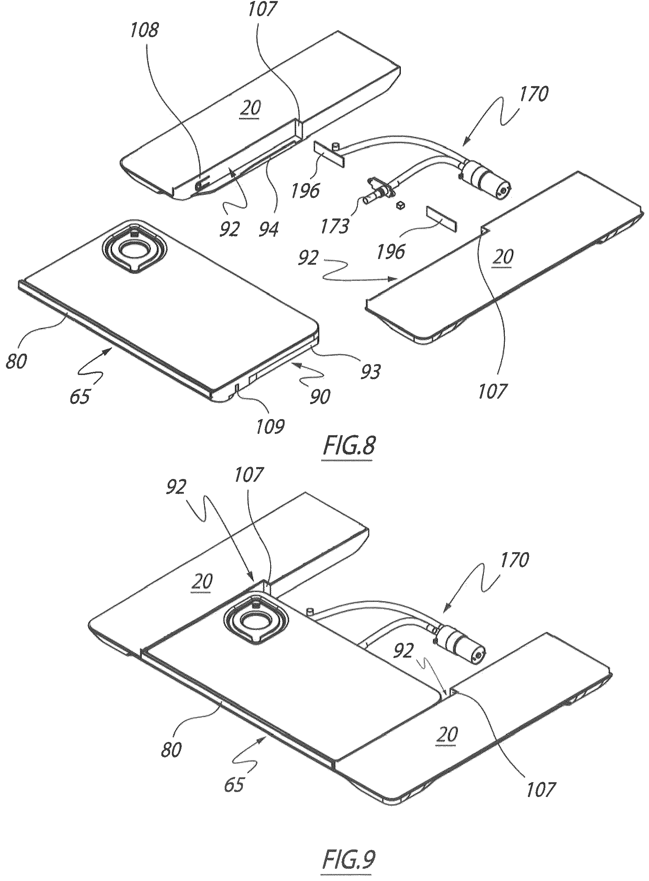

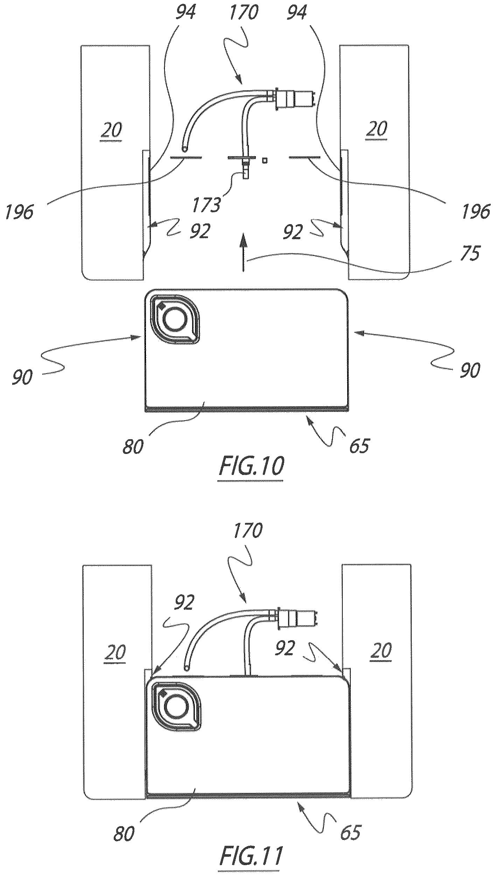

The sidewalls 82 include sidewall portions 90 that engage corresponding portions 92 (see Figures 8 to 11) located in the base 20 so as to locate and facilitate movement of the container body 80 with respect to the base 20 during initial insertion of the removable container 65 in the base cavity 50. In a preferred form, the sidewall portions 90 have angled or ramped features 93 (see Figure 8) that engage opposing angled or ramped features 94 located on the base 20. In other embodiments (not shown), the sidewall portions 90 may additionally or alternatively include a track or a groove that engages a corresponding protrusion located in the base cavity 50 or the base 20 so as to correctly locate and guide the movement of the removable container 65 with respect to the base 20. The sidewall portions 90 may additionally or alternatively include a protrusion that engages a corresponding track or groove located in the base cavity 50 or the base 20. It will be appreciated that the sidewall portions 90 and the corresponding portions 92 located in the base 20 may also cooperate to provide an audible or tactile indication to the user that the removable container 65 has been fully inserted and retained in the base cavity 50.

In a preferred form, the sidewall portions 90 are located at the same relative height with respect to the surface 60 that the corresponding portions 92 in the base 20 are located. The floor 81 of the container body 80 is preferably slidable on the surface 60 along the direction 75. In this way, the floor 81 remains generally parallel to the base 20, and also the surface 60, when the removable container 65 is moved between the open and closed positions relative to the base 20. As such, the surface 60 may be used as a leveller to easily locate the correct orientation to position the removable container 65 with respect to the base 20, and also to facilitate the movement of the removable container 65 between the open and closed positions.

In the depicted embodiment, the container body 80 also includes a recessed portion 95 that is grippable by a user to move the removable container 65 between the open and closed positions relative to the base 20. The recessed portion 95 is preferably located centrally at a front (or proximal) portion 96 of the container body 80 to provide for ease of access for the user and to also allow for a balanced grip on the removable container 65 during movement between the open and closed positions. The recessed portion 95 is dimensioned so as to provide sufficient grip for the user to hold the removable container 65 using only one hand. The sidewalls 82 also include a fluid outlet 97 located towards a rear (or distal) portion 98 of the container body 80. In other embodiments (not shown), the fluid outlet 96 may alternatively be located adjacent to the sidewall portions 90 or the floor 81 of the container body 80.

The removable container 65 also includes a lid 100 that is removably engageable with the body 80 of the removable container 65 to at least partially enclose the chamber 85. In a preferred form, the lid 100 is sealingly engageable with the body 80 to inhibit egress of fluids from the chamber 85. A seal member 105 is provided between the lid 100 and the body 80 to sealingly engage the lid 100 to the body 80. In the depicted embodiment, the seal member 105 is arranged to correspond to an outer periphery of the lid 100 and the body 80. The seal member 105 is preferably formed from a resiliently deformable material such as rubber.

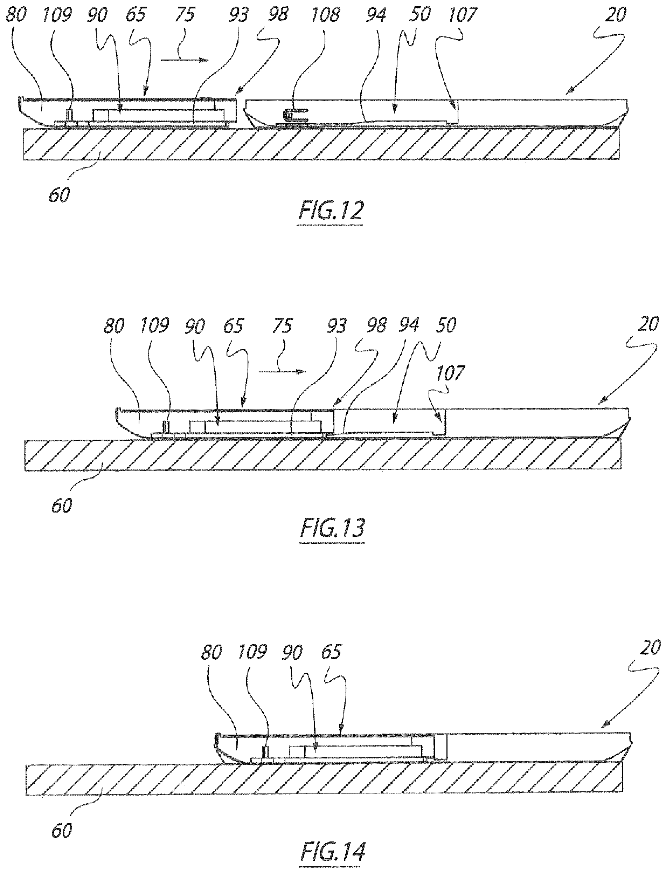

The insertion of the removable container 65 into the base cavity 50 is best shown with reference to Figures 8 to 14. In particular, Figures 8, 10 and 12 show the removable container 65 completely exposed or removed from the base cavity 50 of the base 20. Figures 9, 11, and 14 show the removable container 65 completely retained in the base cavity 50, whilst Figure 13 shows the removable container 65 partially retained in the base cavity 50. As described above, to insert the removable container 65 into the base cavity 50, the user slides the removable container 65 on the surface 60 along the direction 75 until the angled or ramped features 93 of the container body 80 engage the corresponding angled or ramped features 94 of the base 20. The features 93 and 94 cooperate to act as a guide for the removable container 65 to move into the base cavity 50. The removable container 65 continues to move into the base cavity 50 until the rear portion 98 of the container body 80 abuts a stop feature 107 located on the base 20. As discussed above, the features 93 and 94 may cooperate to provide an audible or tactile indication to the user that the container 65 has been fully inserted and retained in the base cavity 50. The base 20 may also include a locking feature 108 that engages a corresponding feature 109 located on the container body 80 when the removable container 65 is fully inserted in the base cavity 50 so as to lock or retain the container 65 in the base cavity 50. In a preferred form, the locking feature 108 is a resiliently deformable member, such as a clip or fastener, that engages a corresponding recess in the container body 80. It will be appreciated that the features 108 and 109 allow the removable container 65 to be retained in the base cavity 50 until such time that a user grips the recessed portion 95 and moves the container 65 out of the base cavity 50. At this point, the feature 108 will resiliently deform to disengage from the feature 109, thereby releasing the container 65 from the base cavity 50.

Returning to Figure 3, in the depicted embodiment, the lid 100 includes an opening 110 generally located at a corner portion of the lid 100, although it will be understood that the opening 110 may be located at any other location on the lid 100. The opening 110 provides access into the chamber 85 of the container body 80 and is a passage through which fluids may be introduced into the chamber 85. The opening 110 may be positioned under a tap to fill the chamber 85 with water. Alternatively, a user may pour water into the chamber 85 from a jug or other container through the opening 110. The orientation of the lid 100 relative to the container body 80 may be changed by rotating the lid 100. As such, the position of the opening 110 with respect to the body 80 may also be changed. It will be appreciated that in an arrangement whereby the opening 110 is located adjacent the front portion 96 of the container body 80 (and towards the front portion 37 of the oven 10), the removable container 65 does not have to be fully removed from the base cavity 20 to provide access to the opening 110, and a user can easily fill the chamber 85 with water from a jug. Alternatively, in an arrangement whereby the opening 100 is located towards a rear portion of the body 80, the user may fully remove the removable container 65 from the base cavity 50 and place the container 65 under a tap to fill the chamber 85 (through the opening 100 with tap water).

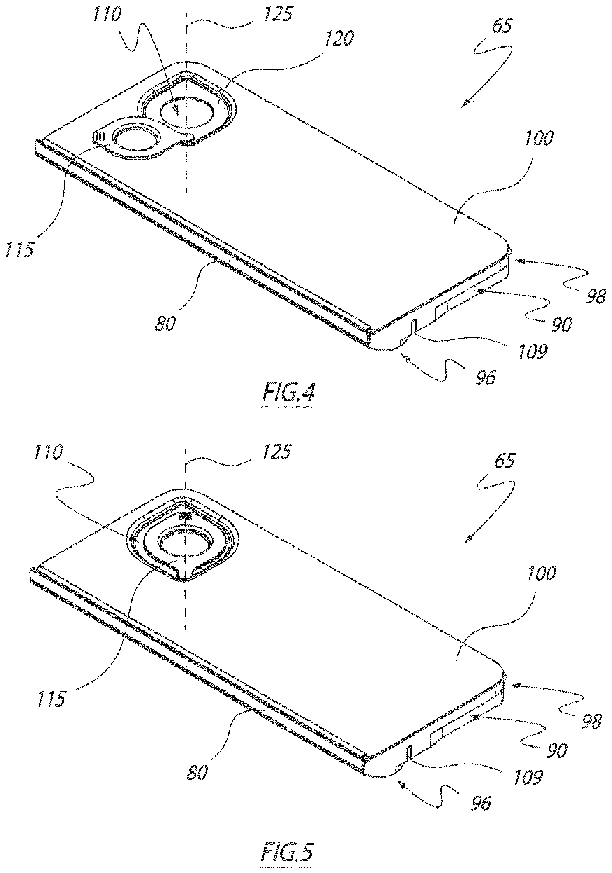

The opening 110 is provided with a cover member 115 that engages a corresponding recessed portion 120 of the lid 100. The cover member 115 may be resiliently deformable. In the depicted embodiment, the cover member 115 is mounted to the lid 100 and is angularly movable about an axis 125 between an open position in which the cover member 115 encloses the opening 110 (see Figure 5), and a closed position in which the opening 110 is at least partially exposed (see Figure 4). In a preferred form, the cover member 115 is biased to the closed position such that the opening 110 is enclosed in a resting state until the user manually moves the cover member 115 to expose the opening 110. It will be appreciated that in other embodiments (not shown), the cover member 115 is a resiliently deformable piece of material (e.g. silicone) that is movable in an out of the opening 110 so as to close and expose the opening 110. The piece of silicone material may be 'popped' or deformed by the user in a direction away and towards the opening 110 to act as a plug for the opening.

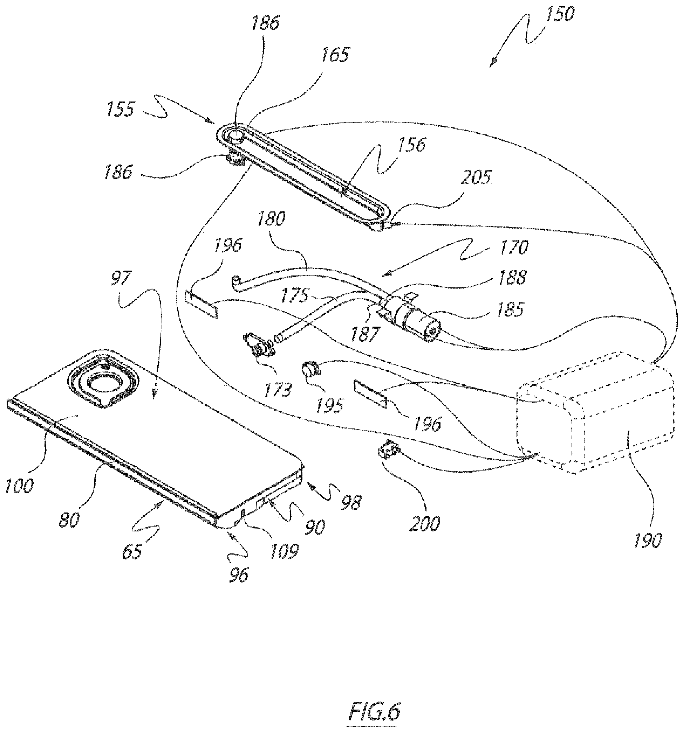

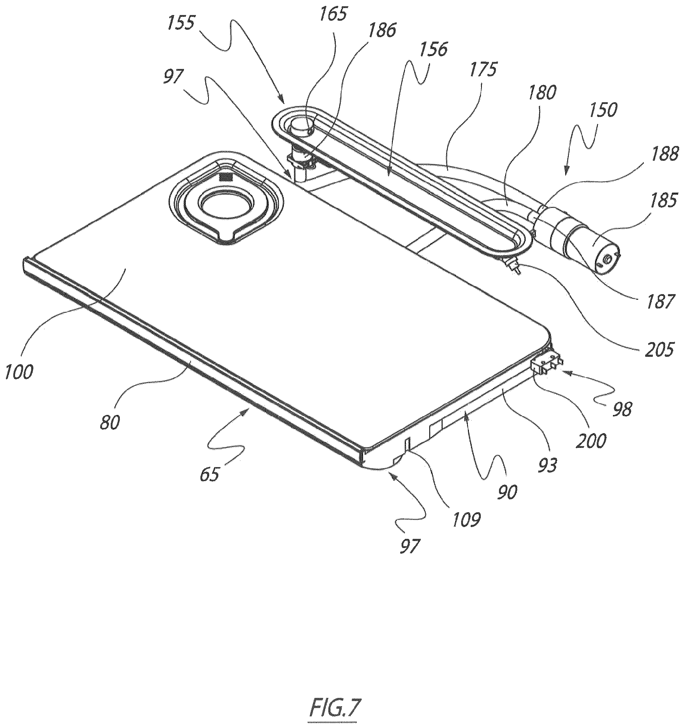

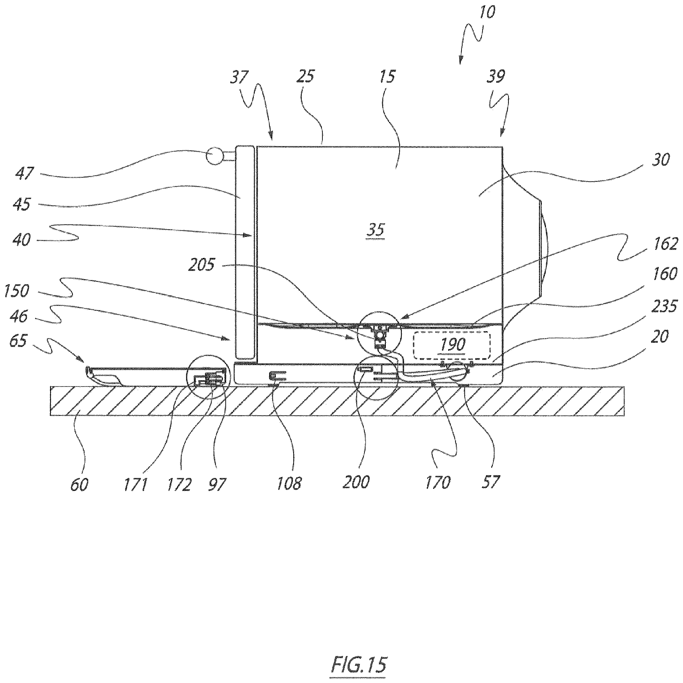

Figures 6, 7 and 15 to 19 schematically depict an interface assembly 150 of the oven 10 that provides a connection between the removable container 65 and the cooking cavity 35 of the oven 10. The interface assembly 150 includes a receptacle 155 having an open top 156. In the depicted embodiment, the receptacle 155 is in the form of a trough, or an elongated shallow container. The receptacle 155 is mounted above the base 20 to a cavity floor 160 located in the cooking cavity 35 of the oven 10, whereby the open top 156 of the receptacle 155 is exposed to the cooking cavity 35 via a cavity opening 162 in the cavity wall 160 (see Figures 15, 16 and 20). The receptacle 155 further includes a fluid inlet 165. The receptacle 155 is preferably formed of a stainless steel material (deep drawn or pressed) and the cavity floor 160 is preferably formed of a non-stick material. In a preferred form, the receptacle 155 and the cavity floor 160 are formed from different materials. It will be appreciated that the receptacle 155, which is exposed to the cooking cavity 35, is easily accessible via the opening 40 of the oven 10 for ease of cleaning.

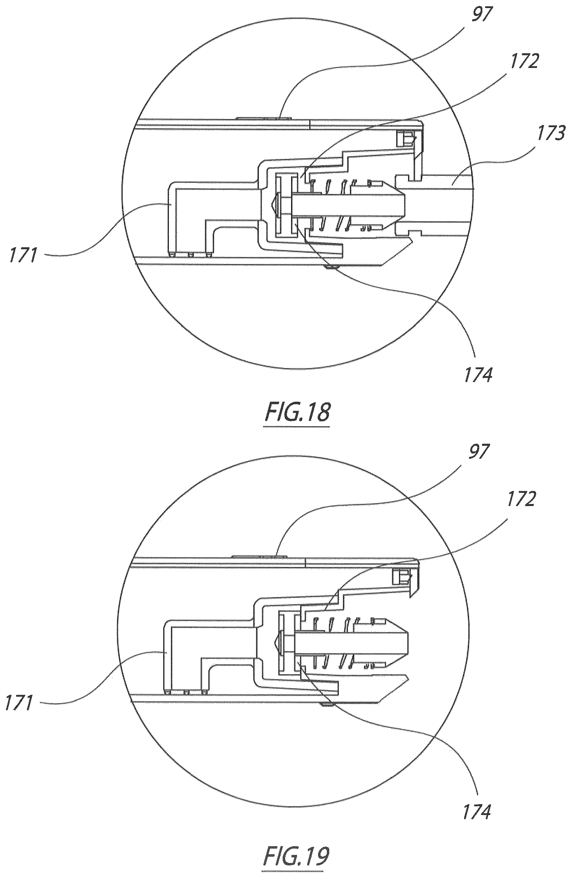

The interface assembly 150 further includes a plumbing assembly 170 providing a connection between the fluid outlet 97 of the container body 80 and the fluid inlet 165 of the receptacle 155. In a preferred form, the plumbing assembly 170 includes a first connector 171 (see Figure 3, 18 and 19) and a valve member 172 located adjacent the fluid outlet 97 of the container body 80. The first connector 171 and the valve member 172 may be located partially or wholly within the fluid outlet 97. The plumbing assembly 170 also includes a second connector 173 that is associated with the fluid inlet 165 of the receptacle 155. In the depicted embodiment, the valve member 172 includes a spring valve 174 that is biased towards a closed position (see Figure 19). As the removable container 65 is moved into the base cavity 50, the spring valve 174 engages the second connector 173, causing the spring valve 174 to move into an open position (see Figure 18), thereby allowing fluids to travel out of the fluid outlet 97 and into the fluid inlet 165. In the depicted embodiment, the first connector 171 includes a part 171A (see Figure 3) that is perpendicular to the floor 81 of the container body 80, with minimal distance between the part 171A and the floor 81. Accordingly, the first connector 171 may provide a passage or a vacuum that allows most of the fluids within the chamber 85 to be evacuated, even when a low level of fluid is present, as the part 171A is close to the bottom of the container body 80.

The plumbing assembly 170 also includes a first conduit 175 and a second conduit 180. A fluid pump 185 of the plumbing assembly 170 is operatively associated with, and preferably located between, the first and second conduits 175 and 180, with the first conduit 175 providing a connection between the fluid outlet 97 of the container body 80 and the fluid pump 185, and the second conduit 180 providing a connection between the fluid pump 185 and the fluid inlet 165 of the receptacle 155. The second connector 173 described above provides the attachment between the first conduit 175 and the fluid outlet 97 via the first connector 171 and the valve member 172. A conduit attachment member 186 is provided to facilitate attachment of the second conduit 180 to the fluid inlet 165. In the depicted embodiment, the conduit attachment member 186 is attached to the receptacle 155 and provides a fluid passage for the fluid inlet 165. It will be appreciated that the fluid inlet 165 is provided at a side of the conduit attachment 186 and is oriented such that the fluid inlet 165 faces a direction generally transverse relative to a direction of extension of the receptacle 155. The arrangement minimises upward exposure of the fluid inlet 165, thus limiting the ingress of debris or crumbs from food items entering and blocking the fluid inlet 165. The fluid pump 185 has a pump inlet 187 connected to the first conduit 175 and a pump outlet 188 connected to the second conduit 180. The fluid pump 185 is operable by a controller 190 to drive or direct a flow of fluid from the fluid outlet 97 of the container body 80 to the fluid inlet 165 of the receptacle 155 so as to at least partially fill the receptacle 155 with fluid.

The controller 190 of the interface assembly 150 is operatively associated with a sensor 195 that is adapted to detect a fluid level in the chamber 85 of the container body 80 and send a signal to the controller 190, which then communicates information to be displayed on a user interface (not shown) of the oven 10 regarding the fluid level. The user interface may be an LCD display, for example. In a preferred form, the sensor 195 is an optical sensor. The optical sensor may be integrally formed with a translucent version of the container body 80, or separately formed and ultrasonically welded to an opaque version of the container body 80. It will be appreciated that when the fluid level detected by the sensor 195 is below a predetermined limit, the sensor 195 sends a signal to the controller 190, which then communicates information to be displayed on the user interface that the chamber 85 needs to be refilled with fluid. In an embodiment whereby the container body 80 is translucent, it is envisaged that the sensor 195 is in the form of a translucent prism (as best shown in Figure 3) which includes a light emitter and a light sensor. In this embodiment, upon diffusion of light through the translucent prism, its reflected quality is altered by fluid being present or absent in the chamber 85, and is detected by the light sensor. The signal communicated to the controller 190 based on this detection may then be used for computation of information supplied to the user. Additionally, as best shown in Figures 6, 8 and 10, the information may also be communicated via one or more LED panels 196 that are mounted in or adjacent the base 20. The one or more LED panels 196 are also operatively associated with the controller 190 and adapted to emit one or more sets of lights that indicate the fluid level detected by the sensor, or different operation modes of the oven 10. For example, the one or more LED panels 196 may be configured to emit a set of blue lights to indicate that the fluid level detected by the sensor 195 is at or above the predetermined limit, or a set of yellow lights to indicate that the fluid level detected by the sensor 195 is below the predetermined limit. The one or more LED panels 196 may also be configured to emit a set of red lights to indicate the oven 10 is operating (thus telling the user that the container 65 should not be removed). It will be understood that the one or more LED panels 196 would not emit any lights when the oven 10 is not operating. In an embodiment whereby the container body 80 is translucent, it will be appreciated that the light emitted by the one or more LED panels 196 will travel through the translucent container body 80 such that the light is visible to the user through the container body 80.

The interface assembly 150 further includes a switch 200 adapted to detect the presence or absence of the removable container 65 in the base cavity 50. In a preferred form, the switch 200 detects whether the removable container 65 is fully engaged or retained in the base cavity 50 and sends a corresponding signal to the controller 190. It will be appreciated that the switch 200 is configured to send a signal to the controller 190, which then communicates information to be displayed on the user interface as to whether the removable container 65 is present or absent (i.e. whether the container 65 is fully engaged and retained in the base cavity, or whether the container 65 has been at least partially removed from the base cavity 50). In the depicted embodiment, the switch 200 is located towards the rear portion 98 of the container body 80 and adjacent the sidewall portion 90. However, it will be appreciated that in other embodiments (not shown), the switch 200 may be located at any other location on or around the container body 80 that is suitable for detection for the removable container 65. For example, the switch 200 may be located adjacent a rear wall of the container body 80, or adjacent the floor 81 of the container body 80. The valve member 172 may also provide an audible or tactile indication to the user that the fluid outlet 97 of the container body 80 is connected to the plumbing assembly 170, thereby indicating that the removable container 65 is fully inserted and retained in the base cavity 50. In a preferred form, the valve member 172 includes the spring valve 174 described above.

The controller 190 of the interface assembly is further operatively associated with a heating assembly 205 (best shown in Figures 15 to 17) to control the operation of the heating assembly 205 based on one or more signals received from the various sensors and switches in the oven 10 (e.g. sensor 195 and switch 200). The heating assembly 205 is mounted to the receptacle 155, which is in turn mounted to the cavity floor 160 of the oven 10 via the cavity opening 162. Accordingly, as earlier discussed, the open top 156 of the receptacle 155 is exposed to the cooking cavity 35 via the cavity opening 162. The cavity opening 162 is surrounded by a rim 210 and, in a preferred form, the rim 210 is crimped to a corresponding rim 215 of the receptacle 155. Crimping the receptacle 155 to the cavity floor 160 allows the cavity floor 160 (which is typically a non-stick material) to be easily mated to the receptacle 155, and also removes the need for conventional assembly parts such as gaskets, wet silicone, mechanical fasteners that may be cumbersome and less visually appealing. This arrangement also maximises the amount of available space in the oven cavity 35, and also allows for ease of access and cleaning of scale and debris that may build up in the receptacle 155. It will also be appreciated that crimping also creates a water tight seal between the receptacle 155 and the cavity floor 160 such that fluid ingress or egress through the cavity opening 162 may be limited or altogether avoided.

The heating assembly 205 includes a heating element 220 mounted to a substrate 225, which is in turn mounted to an underside 230 of the receptacle 155. In a preferred form, the heating element 220 is brazed to the substrate 225, which is made of aluminium. The heating element 220 is preferably a tubular heating element having a flat surface to facilitate contact and attachment to the substrate 225. The flat surface may also provide better heat transfer from the heating element 220 to the receptacle 225. It should be appreciated that the heating element 220 is spaced from the conduit attachment member 186 so as to reduce the amount of heat that may be transferred to the conduit attachment member 186 or the attached plumbing assembly 170. In a preferred form, the substrate 225 is also brazed to the underside 230 of the receptacle 155. As earlier discussed, the receptacle 155 is preferably made of a material that is suitable for brazing, such as stainless steel (deep drawn or pressed) or aluminium. Such materials are also corrosion resistant. It will be appreciated that brazing the heating element 220 to the substrate 225 and/or the substrate 225 to the receptacle 155 may at least avoid the use of mechanical fasteners which may not provide even contact between the heating element 220 to the receptacle 155. It will be understood that uneven contact may cause deformation, discolouration and denaturing of the receptacle 155 over time, and may also result in uneven heat transfer to the fluids in the receptacle 155. Mechanical fasteners may also require additional fasteners that are not visually appealing.

As discussed above, the heating assembly 205 and by extension the heating element 220 is operatively associated with the controller 190, and operable to provide heat to fluid in the receptacle 155. This in turn causes the fluid to evaporate into the cooking cavity 35 (i.e. to produce steam and increase humidity levels in the cooking cavity 35).

It will be appreciated that the heating assembly 205 is located above the base 20 and inside the cooking cavity 35 but below the cavity floor 160 of the oven 10. The plumbing assembly 170 (which is connected to the receptacle 155) is located adjacent the base 20, below the cavity floor 160 and outside of the cooking cavity 35. It will thus be appreciated that fluids entering the plumbing assembly 170 (and in turn the cooking cavity 35) are at room temperature, rather than at higher temperatures where scale may build up and cause damage from blockages. Accordingly, having fluids entering the plumbing assembly 170 at room temperature may at least reduce the likelihood of scale build-up and blockages in the plumbing assembly 170, thereby at least prolonging the life of the oven 10. The receptacle 155 is located away from the plumbing assembly 170 and is easily accessible via the cooking cavity 35 for cleaning.

A heat shield or plate 235 located in or below the cooking cavity 35 or on the base 20 separates the heating assembly 205 from the plumbing assembly 170. The heat shield or plate 235 may either be integrally formed with the base 20, or separately formed and attached to the base 20. The heating assembly 205 also includes a temperature sensor 240 mounted to the substrate 225. The temperature sensor 240 is adapted to detect a temperature of the receptacle 155. It will be appreciated that the substrate 225 may include other areas or zones to allow for mounting or attachment of other elements such as fuses and fixtures for the plumbing assembly 170.

In a preferred form, the fluid pump 185 is controllable to create an optimum ratio of flow rate of fluids being introduced into the receptacle 155 to power density, depending on a cooking mode of the oven 10. By controlling the optimum ratio, the receptacle 155 may be filled at a desired flow rate to cause a desired amount of steam to be directed into the cooking cavity 35 in a desired amount of time to suit the desired cooking mode. The cooking modes of the oven 10 may be selected from a group including toast, steam, 'low & slow', air fry, and browning assist. Different cooking modes or types of the food item being cooked will benefit from different humidity levels in the cooking cavity 35. The fluid pump 185 includes specifications such as gear ratio, low flow rate, size and orientation, operating noise / sound, and wattage, with each specification being variable to create the optimum flow rate. The receptacle 155 itself may also be optimised in size to create the optimum flow rate and evaporation conditions. In a preferred form, the receptacle 155 is optimised for quick evaporation by having a larger width relative to its depth (to maximise surface area and contact to the heating element), and with low power required for the heating element 220. It will also be appreciated that the power delivered to the heating element 220 may be shared with other heating elements of the oven 10, but limited up to a certain power limit such that the heating element 220 does not undesirably draw power away from those other heating elements. The power, heat density, volume and surface area of the heating element 220 may also be optimised accordingly.

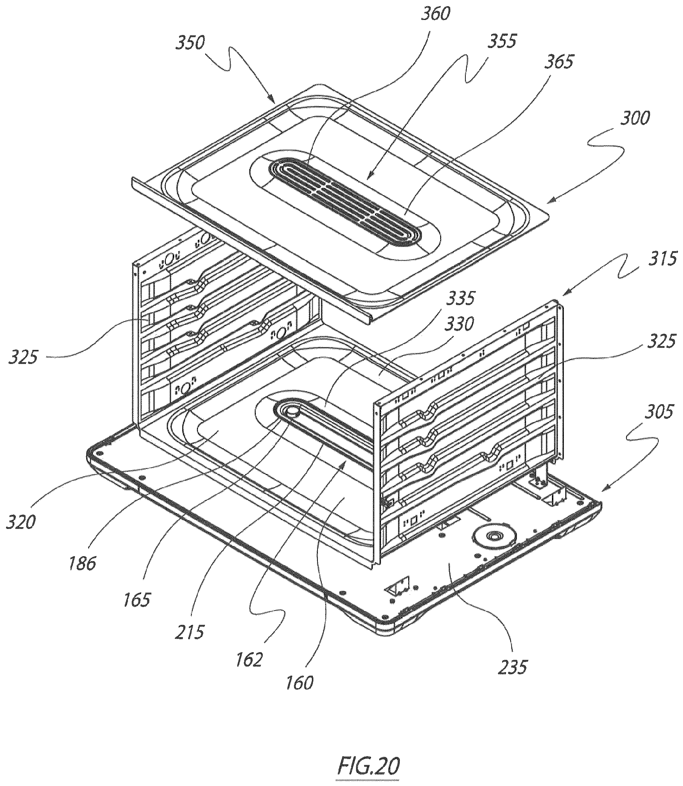

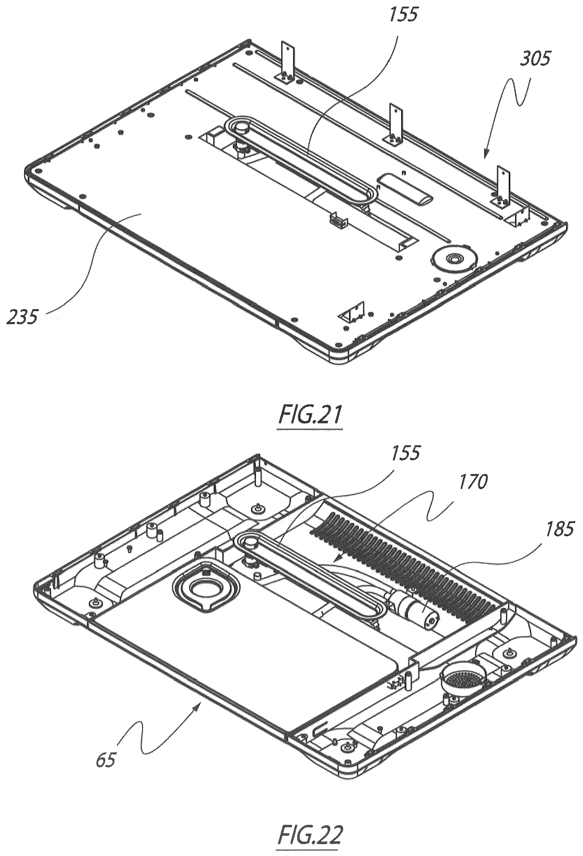

In Figures 20 to 22, there is schematically depicted an inner oven assembly 300 and a base assembly 305 of the oven 10. The inner oven assembly 300 is located in the cooking cavity 35 of the oven 10, whilst the base assembly 305 provides the base 20 of the oven 10. The inner oven assembly 300 includes a cavity part 315 having a base portion 320 and a pair of side portions 325 extending upwardly away from the base portion 320. In the depicted embodiment, the cavity part 315 forms a generally U-shaped structure. In a preferred form, the base portion 320 and the side portions 325 are integrally formed to provide the cavity part 315. It will be appreciated that the integrally formed structure of the base portion 320 may at least minimise the need for fasteners and also reduce the points of egress (e.g. from oil, steam, water, debris or crumbs from the food items being cooked). This arrangement may also reduce the part count and assembly processing costs. The base portion 320 is also easier to clean as there are less sharp corners and debris collection point. It will also be appreciated that the evaporation system (through the heating of fluids in the receptacle 155 to produce steam in the cooking cavity 35) may also be programmable to provide steam assist cleaning, i.e. whereby moisture or steam is introduced into the cooking cavity 35 to soften grease and debris build up.

In the depicted embodiment, the base portion 320 of the cavity part 315 includes the cavity floor 160 of the oven 10 discussed above. The base portion 320 includes angled portions 330 extending generally around a periphery of the cavity floor 160. The receptacle 155 is mounted in the cavity opening 162 of the cavity floor 160, which is located generally at the center of the base portion 320, with the angled portions 330 at least partially surrounding the receptacle 155. In the depicted embodiment, the cavity floor 160 also includes an additional raised portion 335 that surrounds the cavity opening 162. This additional raised portion 335 extends to an uppermost portion of the receptacle (i.e. adjacent to the rim 215) to encourage any debris or crumbs falling from food items being cooked in the cavity 35 to roll away from the receptacle 155.

The base assembly 305 includes the heat shield or plate 235 discussed above and is provided to reflect heat from the oven cavity 35 back into the oven cavity 35. In other words, the heat shield or plate 235 insulates the base cavity 50 (where the plumbing assembly 170 and removable container 65 are located) from heat in the cooking cavity 35. It will be appreciated that the heat shield or plate 235 may function as a chassis that separates the cooking cavity 35 from the base cavity 50 and may provide a platform for mounting sensitive components, thereby avoiding the need to mount such sensitive components in the cooking cavity 35. For example, the heat shield or plate 235 may provide a mounting platform for the plumbing assembly 170 and/or the interface assembly 150 discussed above, along with any other sensitive components such as sensors, switches, speakers, power PCBs and the like. The inclusion of the heat shield or plate 235 also means that the removable container 65 may be located centrally under the cooking cavity 35 with little risk that the heat from the cavity 35 will have an effect on the removable container 65. In a preferred form, the heat shield or plate 235 is galvanised to reduce costs and reflectivity. The heat shield or plate 235 may also include insulation fibre and/or air gaps to enhance its heat shielding capabilities.

The inner oven assembly 300 also includes a removable tray 350 that is adapted to be mounted to the base portion 320 of the cavity part 315. In a preferred form, the tray 350 is a crumb tray that is adapted to collect debris or crumbs from the cooking cavity 35. It will be appreciated that the tray 350 includes a central portion 355 that aligns with the cavity opening 162 of the cavity floor 160. The central portion 355 includes one or more openings or vents 360 to provide a passageway for moisture or steam to travel upwardly into the cooking cavity 35 from the receptacle 155. It will be appreciated that the openings or vents 360 are suitably sized to allow for travel of moisture or steam, but to prevent ingress of debris or crumbs. The openings or vents 360 may be formed as separately woven mesh, or punched/perforated through the tray 350. It will also be appreciated that the openings or vents 360 are elongated to correspond to the shape of the elongated receptable 155, which may at least encourage condensation to drip back into the receptacle 155.

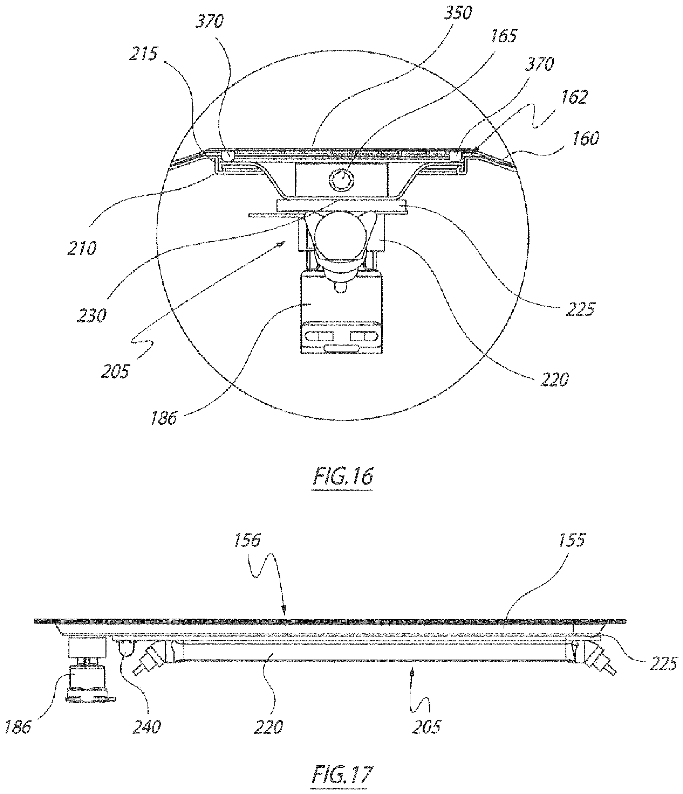

The central portion 355 also includes a raised portion 365 that surrounds the openings or vents 360, and have a corresponding shape to the additional raised portion 335 of the cavity floor 160 located below the tray 350. Similar to the additional raised portion 335 discussed above, the raised portion 365 extends to an uppermost height of the openings or vents 360 to encourage any debris or crumbs falling from food items being cooked in the cavity 35 to roll away from the openings or vents 360. It will be appreciated that the central portion 355, the openings or vents 360 and the raised portion 365 assist with locating and correctly mounting the tray 350 with respect to the base portion 320. The tray 350 may include one or more additional features to assist with locating and mounting the tray 350, and to also create a seal to prevent condensation and debris or crumbs from collecting underneath the tray 350. This arrangement may thus allow the various components to be easily cleaned. Referring to Figure 16, for example, the tray 350 may be provided with one or more seal members 370 in the form of an o-ring, gasket, high-temperature silicone seal or the like, to assist with the prevention of condensation / debris / crumbs from collecting underneath the tray 350.

In other embodiments (not shown), the tray 350 may include a single opening sized to expose the receptacle 155 to the cooking cavity. This arrangement may allow for visual and physical access to the receptacle 155 from the cooking cavity 35. The opening of the tray 350 in this embodiment may be provided with a removable cover (not shown) that corresponds to the size of the receptacle 155.

In the embodiment as shown in Figures 1 and 15, for example, the oven 10 may also include a door sensor (380) that detects whether the door 45 is in the open position (in which the opening 40 of the oven 10 is at least partially exposed) or closed position (in which the opening 40 of the oven 10 is enclosed by the door 45). In such embodiments, the door sensor will send a signal to the controller 190, which then communicates information to be displayed on the user interface to prompt the user to close the door 45. If the door 45 of the oven is open, and steam is being introduced into the cooking cavity 35 whilst the door 45 is open, the steam would escape out of the cooking cavity 35 and the receptacle 155 could be prematurely depleted of fluids. It will be appreciated that the door sensor 380 may thus be provided as a safety feature of the oven 10, and also avoid any undesirable condensation of fluids outside of the oven 10. It is envisaged that the door sensor 380 may be in the form of a tilt switch, a microswitch, a hall effect sensor, or any other type of sensor suitable to detect the position of the door 45.

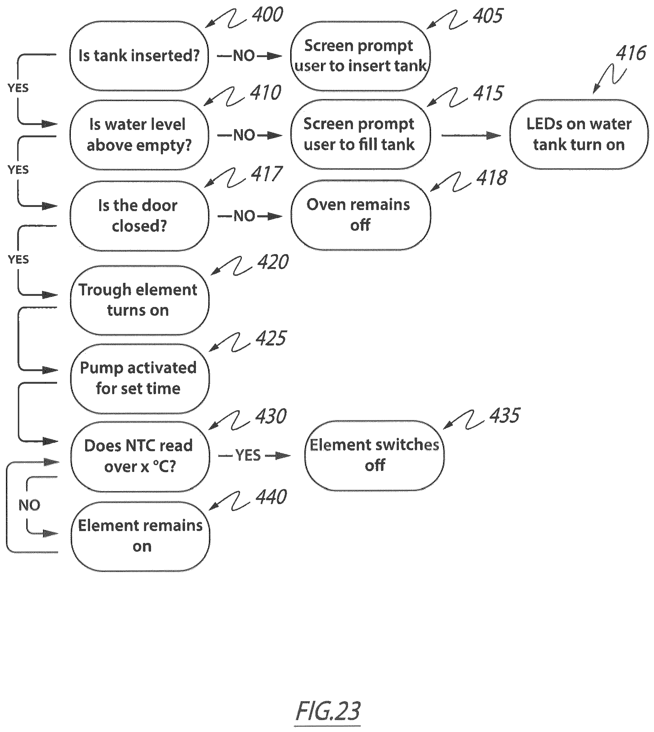

An exemplary operation of a humidity system of the oven 10 will now be described with respect to Figure 23, in which a series of steps of a preferred embodiment is described.

At step 400, for example, the switch 200 detects whether the removable container 65 is fully inserted and engaged in the base cavity 50. If the switch 200 detects that the removable container 65 is not fully inserted and engaged at step 400, the switch 200 sends a signal to the controller 190, which then communicates information to be displayed on the user interface at step 405 to prompt the user to fully / correctly insert the removable container 65. If the switch 200 detects that the removable container 65 is fully / correctly inserted and engaged at step 400, the switch 200 sends a signal to the controller 190, which then instructs the sensor 195 to detect the fluid level in the chamber 85 of the container body 80 at step 410.

At step 410, if the sensor 195 detects that the fluid level in the chamber 85 is below a predetermined limit, or is empty, the sensor 195 sends a signal to the controller 190 to communicate information to be displayed on the user interface at step 415 that the chamber 85 needs to be refilled with fluid. At the same time, the controller 190 sends a signal to the one or more LED panels 196 to emit a set of lights indicating the status of the fluid level at step 416. If the sensor 195 detects that the fluid level in the chamber 85 is at or above the predetermined limit at step 410, the sensor 195 sends a signal to the controller 190 to instruct the door sensor 380 to detect whether the door 45 is open or closed at step 417. If the door sensor 380 detects that the door 45 is open, then the door sensor 380 sends a signal to the controller 190 to ensure that the oven 10 remains off (i.e. the heating element 220 does not get energised) at step 418. If the door sensor 380 detects that the door 45 is closed at step 417, then the door sensor 380 sends a signal to the controller 190 to enable operation of the heating element 220 at step 420 and to enable operation of the fluid pump 185 for a predetermined amount of time at step 425 (thereby introducing fluids into the receptacle 155 from the container 65. It will be understood that the predetermined amount of time that the fluid pump 185 is operated at step 425 is dependent on a flow rate of the fluid pump 185 and a volume or surface area of the receptacle 155.

At step 430, following operation of the fluid pump 185, the temperature sensor 240 detects the temperature of the receptacle 155. It would be understood that a detected temperature of the receptacle 155 of over X degrees Celsius indicates that the receptacle 155 has reached an undesirable 'dry boil'. It will be understood by a person skilled in the art that X degrees Celsius may be anywhere between 80 to 120 degrees Celsius for dry boil detection. Accordingly, if the temperature sensor 240 detects that the temperature of the receptacle 155 is over X degrees Celsius at step 430, the temperature sensor 240 sends a signal to the controller 190, which then disables operation of the heating element 220 at step 435. In this way, it will be appreciated that the temperature sensor 240 acts as part of a safety feature of the oven 10 to prevent dry boil in the receptacle 155, which could otherwise cause damage to the receptacle 155 and potentially insufficient humidity levels in the cooking cavity 35. If the temperature sensor 240 detects that the temperature of the receptacle 155 is under X degrees Celsius at step 430, the temperature sensor 240 sends a signal to the controller 190, which then maintains operation of the heating element 220 at step 440.

It will be appreciated that the adding moisture into an oven cavity may also be beneficial to vary the type of food item being cooked and techniques used. Additionally, adding moisture or humidity in an oven cavity may increase the versatility of the oven and provides a more desirable environment for the various uses of the oven, such as baking, holding, thawing, roasting, proofing, air frying, incubating, steaming, and cleaning.

Although the invention has been described with reference to preferred embodiments, it will be appreciated by those persons skilled in the art that the invention may be embodied in many other forms. The invention is defined in claim 1. Preferred embodiments are defined in the dependent claims.

## Claims

1. An oven (10) having a body (15) that includes a base (20), a ceiling (25), and a wall (30) extending between the base (20) and the ceiling (25), the wall (30) at least partly surrounding a cooking cavity (35);
the base (20) including a base cavity (50) and an opening that extends between the base cavity (50) and the cooking cavity (35);
the oven (10) further including a removable container (65) having a floor and sidewalls (82) that define a chamber (85) to hold fluids therein, the base cavity (50) adapted to receive the removable container (65),
the removable container (65) being movable relative to the base cavity between a storage position in which the removable container (65) is retained in the base cavity (50), and an open position in which the removable container (65) is at least partially exposed relative to the base cavity (50);
the oven (10) further including an interface assembly (150) providing a connection between a fluid outlet (97) of the removable container (65) and the cooking cavity (35), the interface assembly (150) including:
a receptacle (155) mounted above the base (20) and having an open top (156) that is exposed to the cooking cavity, the receptacle (155) being located underneath the cooking cavity (35), the receptacle (155) further including a fluid inlet (165);
a plumbing assembly (170) connecting the fluid outlet (97) of the removable container (65) and the fluid inlet (165) of the open receptacle (155), the plumbing assembly (170) including a fluid pump (185) operable to direct a flow of fluid from the fluid outlet (97) of the removable container (65) into fluid inlet (165) of the receptacle (155); and
a heating assembly (205) mounted to an underside (230) of the receptacle (155), the heating assembly (205) being adapted to heat fluids in the receptacle (155) for evaporation of said fluids into the cooking cavity (35).

2. The oven (10) of claim 1, wherein the heating assembly (205) includes a heating element (220) mounted to a substrate (225), with the substrate (225) being mounted to the underside (230) of the receptacle (155).

3. The oven (10) of claim 2, wherein the heating element (220) is brazed to the substrate (225), and the substrate (225) is brazed to the underside (230) of the receptacle (155).

4. The oven (10) of any one of claims 1 to 3, wherein the heating assembly (205) is located above the base (20) of the oven (10) and below the cooking cavity (35).

5. The oven (10) of claim 4, wherein the plumbing assembly (170) is located adjacent the base (20) of the oven (10) and outside of the cooking cavity (35).

6. The oven (10) of any one of claims 1 to 5, wherein the heating assembly (205) further includes a temperature sensor (240) adapted to detect a temperature of the receptacle (155).

7. The oven (10) of any one of claims 1 to 6, wherein the interface assembly (150) further includes a switch (200) to detect the absence or presence of the removable container (65) in the base cavity (50).

8. The oven (10) of claim 7, wherein the switch (200) is located towards a rear portion (98) of the removable container (65).

9. The oven (10) of any one of claims 1 to 8, wherein the interface assembly (150) further includes a sensor (195) to detect a fluid level in the chamber (85) of the removable container (65).

10. The oven (10) of any one of claims 1 to 9, further including a heat shield (235) located between the heating assembly (205) and the plumbing assembly (170).

11. The oven (10) of claim 10, wherein the heat shield (235) is integrally formed with the base (20).

12. The oven (10) of any one of claims 1 to 11, further including an inner oven assembly (300) and a base assembly (305), with the base assembly (305) providing the base (20) of the oven (10), and the inner oven assembly (300) including a cavity part (315) that has a base and sidewall portions (320, 325) that are integrally formed.

13. The oven (10) of claim 12, wherein the inner oven assembly (300) further includes a tray adapted to be mounted on the base portion (320) of the cavity part (315), the tray including mounting features that cooperate with corresponding mounting features located on the base portion (320) of the cavity part (315), and wherein the tray is in the form of a crumb tray.

14. The oven (10) of any one of claims 1 to 13, wherein the fluid pump (185) is controllable to create an optimum ratio of flow rate of fluids being introduced into the receptacle (155) to power density so as to cause a desired amount of steam to be directed into the cooking cavity.

## Patentansprüche

1. Ein Ofen (10) mit einem Körper (15), der eine Basis (20), eine Decke (25) und eine Wand (30) umfasst, die sich zwischen der Basis (20) und der Decke (25) erstreckt, wobei die Wand (30) zumindest teilweise einen Kochhohlraum (35) umgibt;
wobei die Basis (20) einen Basishohlraum (50) und eine Öffnung umfasst, die sich zwischen dem Basishohlraum (50) und dem Kochhohlraum (35) erstreckt;
wobei der Ofen (10) ferner einen entfernbaren Behälter (65) umfasst, der einen Boden und Seitenwände (82) aufweist, die eine Kammer (85), um Fluide darin zu halten, definieren, wobei der Basishohlraum (50) dazu angepasst ist, den entfernbaren Behälter (65) aufzunehmen,
wobei der entfernbare Behälter (65) relativ zu dem Basishohlraum zwischen einer Lagerposition, in der der entfernbare Behälter (65) in dem Basishohlraum (50) gehalten wird, und einer offenen Position, in der der entfernbare Behälter (65) zumindest teilweise relativ zu dem Basishohlraum (50) freiliegt, beweglich ist;
wobei der Ofen (10) ferner eine Schnittstellenanordnung (150) umfasst, die eine Verbindung zwischen einem Fluidauslass (97) des entfernbaren Behälters (65) und dem Kochhohlraum (35) bereitstellt, wobei die Schnittstellenanordnung (150) Folgendes umfasst:
einen Behälter (155), der über der Basis (20) montiert ist und eine offene Oberseite (156) aufweist, die zu dem Kochhohlraum freiliegt, wobei sich der Behälter (155) unter dem Kochhohlraum (35) befindet, wobei der Behälter (155) ferner einen Fluideinlass (165) umfasst;
eine Rohrleitungsanordnung (170), die den Fluidauslass (97) des entfernbaren Behälters (65) und den Fluideinlass (165) des offenen Behälters (155) verbindet, wobei die Rohrleitungsanordnung (170) eine Fluidpumpe (185) umfasst, die dahingehdn betriebsfähig ist, einen Fluidstrom von dem Fluidauslass (97) des entfernbaren Behälters (65) in den Fluideinlass (165) des Behälters (155) zu leiten; und
eine Heizanordnung (205), die an einer Unterseite (230) des Behälters (155) montiert ist, wobei die Heizanordnung (205) dazu angepasst ist, Fluide in dem Behälter (155) zum Verdampfen der Fluide in den Kochhohlraum (35) zu erwärmen.

2. Der Ofen (10) gemäß Anspruch 1, wobei die Heizanordnung (205) ein Heizelement (220) umfasst, das an einem Substrat (225) montiert ist, wobei das Substrat (225) an der Unterseite (230) des Behälters (155) montiert ist.

3. Der Ofen (10) gemäß Anspruch 2, wobei das Heizelement (220) an das Substrat (225) gelötet ist und das Substrat (225) an die Unterseite (230) des Behälters (155) gelötet ist.

4. Der Ofen (10) gemäß einem der Ansprüche 1 bis 3, wobei sich die Heizanordnung (205) über der Basis (20) des Ofens (10) und unter dem Kochhohlraum (35) befindet.

5. Der Ofen (10) gemäß Anspruch 4, wobei sich die Rohrleitungsanordnung (170) angrenzend an die Basis (20) des Ofens (10) und außerhalb des Kochhohlraums (35) befindet.

6. Der Ofen (10) gemäß einem der Ansprüche 1 bis 5, wobei die Heizanordnung (205) ferner einen Temperatursensor (240) umfasst, der dazu angepasst ist, eine Temperatur des Behälters (155) zu erfassen.

7. Der Ofen (10) gemäß einem der Ansprüche 1 bis 6, wobei die Schnittstellenanordnung (150) ferner einen Schalter (200) umfasst, um das Fehlen oder Vorhandensein des entfernbaren Behälters (65) in dem Basishohlraum (50) zu erfassen.

8. Der Ofen (10) gemäß Anspruch 7, wobei sich der Schalter (200) in Richtung eines hinteren Abschnitts (98) des entfernbaren Behälters (65) befindet.

9. Der Ofen (10) gemäß einem der Ansprüche 1 bis 8, wobei die Schnittstellenanordnung (150) ferner einen Sensor (195) umfasst, um einen Fluidpegel in der Kammer (85) des entfernbaren Behälters (65) zu erfassen.

10. Der Ofen (10) gemäß einem der Ansprüche 1 bis 9, der ferner einen Hitzeschild (235), der sich zwischen der Heizanordnung (205) und der Rohrleitungsanordnung (170) befindet, umfasst.

11. Der Ofen (10) gemäß Anspruch 10, wobei der Hitzeschild (235) integral mit der Basis (20) ausgebildet ist.

12. Der Ofen (10) gemäß einem der Ansprüche 1 bis 11, der ferner eine innere Ofenanordnung (300) und eine Basisanordnung (305) umfasst, wobei die Basisanordnung (305) die Basis (20) des Ofens (10) bereitstellt und die innere Ofenanordnung (300) einen Hohlraumteil (315) umfasst, der eine Basis und Seitenwandabschnitte (320, 325) aufweist, die integral ausgebildet sind.

13. Der Ofen (10) gemäß Anspruch 12, wobei die innere Ofenanordnung (300) ferner eine Schale umfasst, die dazu angepasst ist, an dem Basisabschnitt (320) des Hohlraumteils (315) montiert zu werden, wobei die Schale Montagemerkmale umfasst, die mit entsprechenden Montagemerkmalen, die sich an dem Basisabschnitt (320) des Hohlraumteils (315) befinden, zusammenwirken, und wobei die Schale in Form einer Krümelschale vorliegt.

14. Der Ofen (10) gemäß einem der Ansprüche 1 bis 13, wobei die Fluidpumpe (185) dahingehend steuerbar ist, ein optimales Verhältnis von Strömungsrate von Fluiden, die in den Behälter (155) eingeführt werden, zu Leistungsdichte zu erzeugen, um zu bewirken, dass eine gewünschte Menge an Dampf in den Kochhohlraum geleitet wird.

## Revendications

1. Four (10) présentant un corps (15) qui comporte une base (20), un plafond (25) et une paroi (30) s'étendant entre la base (20) et le plafond (25), la paroi (30) entourant au moins partiellement une cavité de cuisson (35) ;
la base (20) comportant une cavité de base (50) et une ouverture qui s'étend entre la cavité de base (50) et la cavité de cuisson (35) ;
le four (10) comportant en outre un récipient amovible (65) présentant un plancher et des parois latérales (82) qui définissent une chambre (85) pour contenir des fluides à l'intérieur, la cavité de base (50) étant adaptée à recevoir le récipient amovible (65),
le récipient amovible (65) étant mobile par rapport à la cavité de base entre une position de stockage, dans laquelle le récipient amovible (65) est retenu dans la cavité de base (50), et une position ouverte dans laquelle le récipient amovible (65) est au moins partiellement exposé par rapport à la cavité de base (50) ;
le four (10) comportant en outre un ensemble d'interface (150) fournissant une liaison entre une sortie de fluide (97) du récipient amovible (65) et la cavité de cuisson (35), l'ensemble d'interface (150) comportant :
un réceptacle (155) monté au-dessus de la base (20) et présentant un dessus ouvert (156) qui est exposé à la cavité de cuisson, le réceptacle (155) comportant en outre une entrée de fluide (165) ;
un ensemble de plomberie (170) reliant la sortie de fluide (97) du récipient amovible (65) et l'entrée de fluide (165) du réceptacle ouvert (155), l'ensemble de plomberie (170) comportant une pompe à fluide (185) pouvant fonctionner pour diriger un écoulement de fluide depuis la sortie de fluide (97) du récipient amovible (65) jusque dans l'entrée de fluide (165) du réceptacle (155) ; et
un ensemble de chauffage (205) monté sur un dessous (230) du réceptacle (155), l'ensemble de chauffage (205) étant adapté à chauffer des fluides dans le réceptacle (155) pour l'évaporation desdits fluides dans la cavité de cuisson (35).

2. Four (10) selon la revendication 1, dans lequel l'ensemble de chauffage (205) comporte un élément chauffant (220) monté sur un substrat (225), le substrat (225) étant monté sur le dessous (230) du réceptacle (155).

3. Four (10) selon la revendication 2, dans lequel l'élément chauffant (220) est brasé sur le substrat (225) et le substrat (225) est brasé sur le dessous (230) du réceptacle (155).

4. Four (10) selon l'une quelconque des revendications 1 à 3, dans lequel l'ensemble de chauffage (205) est situé au-dessus de la base (20) du four (10) et au-dessous de la cavité de cuisson (35).

5. Four (10) selon la revendication 4, dans lequel l'ensemble de plomberie (170) est situé de manière adjacente à la base (20) du four (10) et à l'extérieur de la cavité de cuisson (35).

6. Four (10) selon l'une quelconque des revendications 1 à 5, dans lequel l'ensemble de chauffage (205) comporte en outre un capteur de température (240) adapté à détecter une température du réceptacle (155).

7. Four (10) selon l'une quelconque des revendications 1 à 6, dans lequel l'ensemble d'interface (150) comporte en outre un commutateur (200) pour détecter l'absence ou la présence du récipient amovible (65) dans la cavité de base (50).

8. Four (10) selon la revendication 7, dans lequel le commutateur (200) est situé vers une portion arrière (98) du récipient amovible (65).

9. Four (10) selon l'une quelconque des revendications 1 à 8, dans lequel l'ensemble d'interface (150) comporte en outre un capteur (195) pour détecter un niveau de fluide dans la chambre (85) du récipient amovible (65).

10. Four (10) selon l'une quelconque des revendications 1 à 9, comportant en outre un écran thermique (235) situé entre l'ensemble de chauffage (205) et l'ensemble de plomberie (170).

11. Four (10) selon la revendication 10, dans lequel l'écran thermique (235) est formé d'un seul tenant avec la base (20).

12. Four (10) selon l'une quelconque des revendications 1 à 11, comportant en outre un ensemble de four intérieur (300) et un ensemble de base (305), l'ensemble de base (305) fournissant la base (20) du four (10) et l'ensemble de four intérieur (300) comportant une partie de cavité (315) qui présente une base et des portions de paroi latérale (320, 325) qui sont formées d'un seul tenant.

13. Four (10) selon la revendication 12, dans lequel l'ensemble de four intérieur (300) comporte en outre un plateau adapté à être monté sur la portion de base (320) de la partie de cavité (315), le plateau comportant des moyens de montage qui coopèrent avec des moyens de montage correspondants situés sur la portion de base (320) de la partie de cavité (315), et dans lequel le plateau se présente sous la forme d'un plateau ramasse-miettes.

14. Four (10) selon l'une quelconque des revendications 1 à 13, dans lequel la pompe à fluide (185) peut être commandée pour créer un rapport optimal entre le débit de fluides introduits dans le réceptacle (155) et la densité de puissance de manière à amener une quantité souhaitée de vapeur à être dirigée dans la cavité de cuisson.
